# EUROPÄISCHE PATENTSCHRIFT

(11) **EP 4 594 636 B1**
(45) Veröffentlichungstag und Bekanntmachung des Hinweises auf die Patenterteilung: **08.04.2026**
(21) Anmeldenummer: 23764907.4
(22) Anmeldetag: 04.09.2023
(51) Int. Cl.: F03D 80/80, F03D 80/00, F03D 80/70

(54) **BETRIEBSSICHERE LAGERANORDNUNG FÜR EIN PITCHROHR EINER WINDKRAFTANLAGE**
FAIL OPERATIONAL BEARING ARRANGEMENT FOR A PITCH TUBE OF A WIND TURBINE
ENSEMBLE PALIER FIABLE POUR UN TUYAU DE PAS D'UNE ÉOLIENNE

(30) Priorität: 27.09.2022 EP 22197927
(43) Veröffentlichungstag der Anmeldung: 06.08.2025
(73) Patentinhaber: Flender GmbH, 46395 Bocholt (DE)
(72) Erfinder: KÖNIG, Christian, 46395 Bocholt (DE); VAN ACKEN, Lars, 46395 Bocholt (DE)
(74) Vertreter: Michalski Hüttermann & Partner Patentanwälte mbB
(86) Internationale Anmeldenummer: PCT/EP2023/074121
(87) Internationale Veröffentlichungsnummer: WO 2024/068186

(56) Entgegenhaltungen:
- EP-A1- 2 933 483
- EP-A1- 3 795 861
- EP-B1- 3 795 825
- EP-B1- 3 795 862

## Beschreibung

Die Erfindung betrifft eine Lageranordnung für ein Pitchrohr einer Windkraftanlage, mit dessen Hilfe das Pitchrohr in einem Getriebe der Windkraftanlage gelagert und durchgeführt werden kann. Die Erfindung betrifft einen Antriebsstrang mit einer derartigen Lageranordnung, eine Windkraftanlage mit einer derartigen Lageranordnung und ein Datenagglomerat zur virtuellen Abbildung einer derartigen Lageranordnung zum Zwecke der additiven Fertigung und/oder Simulation.

Um bei Windkraftanlagen eine Blatteinstellwinkelregelung (Pitchregelung) vornehmen zu können, sind elektrische und/oder hydraulische Leitungen erforderlich, die zwischen dem Rotor und einem generatorseitigen Anschluss verlaufen. Zur Aufnahme dieser Leitungen dient ein als Pitchrohr bezeichnetes Rohr, das sich von einem Generator bis zu dem Rotor erstrecken kann. Insbesondere sind der Rotor und der Generator koaxial zueinander angeordnet, so dass das Pitchrohr durch ein zwischen dem Rotor und dem Generator zwischengeschaltetes Getriebe über die gesamte Axialerstreckung des Getriebes, insbesondere koaxial zum Getriebe, hindurchgeführt ist.

Aus EP 3 795 825 A1 ist es bekannt ein Pitchrohr über ein aus einem elektrischen Nichtleiter hergestelltes Fixiermittel mit einem Platenträger eines Planetengetriebes einer Windkraftanlage zu fixieren, wobei das Fixiermittel sowohl mit dem Pitchrohr als auch mit dem Platenträger befestigt ist.

Aus EP 3 795 861 A1 ist es bekannt ein Pitchrohr über ein außerhalb eines Getriebegehäuses vorgesehenes Lager zu lagern, um im Generator erzeugte Streuströme über das Lager abzuführen.

Aus EP 3 795 862 A1 ist es bekannt ein Pitchrohr mit Hilfe eines Fixiermittels in einem Getriebe einer Windkraftanlage zu fixieren, wobei zwischen dem Fixiermittel und Pitchrohr eine elektrisch isolierende Isolierschicht vorgesehen ist.

Aus EP 2 933 483 A1 ist eine Windkraftanlage bekannt, bei der eine Generatorwelle eines Generators über eine zwischen Flanschflächen vorgesehene elektrische Isolierung mit einer Abtriebswelle eines Getriebes verbunden ist.

Es besteht ein ständiges Bedürfnis die Durchführung eines Pitchrohrs durch ein Getriebe einer Windkraftanlage möglichst betriebssicher zu gestalten.

Es ist die Aufgabe der Erfindung Maßnahmenaufzuzeigen, die eine betriebssicherere Durchführung eines Pitchrohrs durch ein Getriebe einer Windkraftanlage ermöglichen.

Die Lösung der Aufgabe erfolgt durch eine Lageranordnung mit den Merkmalen des Anspruchs 1, einen Antriebsstrang mit den Merkmalen des Anspruchs 13, einer Windkraftanlage mit den Merkmalen des Anspruchs 14, sowie ein Datenagglomerat mit den Merkmalen des Anspruchs 15. Bevorzugte Ausgestaltungen sind in den Unteransprüchen und der nachfolgenden Beschreibung angegeben, die jeweils einzeln oder in Kombination einen Aspekt der Erfindung darstellen können. Wenn ein Merkmal in Kombination mit einem anderen Merkmal dargestellt wird, dient dies nur der vereinfachten Darstellung der Erfindung und soll keinesfalls bedeuten, dass dieses Merkmal nicht auch ohne das andere Merkmal eine Weiterbildung der Erfindung sein kann.

Ein Aspekt der Erfindung betrifft eine Lageranordnung für ein Pitchrohr einer Windkraftanlage, mit einer Getriebewelle, insbesondere Getriebeausgangswelle zum Einleiten eines in einem Getriebe gewandelten Drehmoments in einen Generator, einer Lagerkassette zur Lagerung und Abdichtung des Pitchrohrs gegenüber der Getriebewelle, einem von der Getriebewelle oder von dem Pitchrohr ausgebildeten Befestigungsflansch zur drehfesten Befestigung der Lagerkassette und einem über ein erstes Befestigungselement mit dem Befestigungsflansch und über ein zweites Befestigungselement mit der Lagerkassette befestigtes Isolationselement zur elektrischen Isolation des Pitchrohrs gegenüber der Getriebewelle.

Durch die Lagerungsfunktion der Lagerkassette wird eine Relativdrehung der Getriebewelle relativ zum Pitchrohr geschaffen. Das Pitchrohr kann beispielsweise mit einem Rotor der Windkraftanlage oder mit einem Rotor einer den Generator ausbildenden elektrischen Maschine drehfest gekoppelt sein, so dass eine ansonsten vorzusehende Lagerung an einem der Rotoren durch eine kostengünstige reibschlüssige und/oder formschlüssige Kupplung oder mechanische Verbindung ersetzt werden kann. Die an einem der Rotoren eingesparte Lagerung kann in die Nähe einer Dichtung zwischen dem Pitchrohr und dem Getriebe verlagert und in der Lagerkassette zusammengefasst werden. Dies führt zu einer kostengünstigen Bauteilintegration der Funktionen Lagern und Dichten in eine gemeinsame insbesondere vormontierbare, Baueinheit in Form der Lagerkassette. Anstatt das Pitchrohr drehfest mit einem rotierenden Bauteil des Getriebes zu fixieren, wird mit Hilfe der Lagerkassette bewusst eine Relativdrehung und gegebenenfalls auch eine Relativverschiebung in axialer Richtung des Pitchrohrs zum Getriebe beziehungsweise der Getriebewelle geschaffen, die aufgrund der Bauteilintegration mit der Abdichtung des Pitchrohrs gegenüber dem Getriebe zu einer Kostenersparnis führen kann.

Grundsätzlich ist es auch möglich, dass das Pitchrohr undrehbar, insbesondere unbeweglich, ausgeführt ist. Insbesondere zur Montage kann eine axiale Relativbewegung des Pitchrohrs relativ zum Getriebe und/oder relativ zur Getriebewelle zugelassen werden, wobei das Pitchrohr in der endgültigen Montagepositionen, in welcher das in Umfangsrichtung feststehende Pitchrohr mit dem Rotor der Windkraftanlage und dem Generator gekoppelt ist. Beispielsweise kann das Pitchrohr mit einem Generatorgehäuse des Generators drehfest befestigt sein, so dass eine Lagerung relativ zu dem Rotor des Generators eingespart werden kann. Durch das nicht drehbare Pitchrohr ist eine Kabelführung innerhalb des Pitchrohrs durch das Getriebe hindurch vereinfacht und besonders betriebssicher.

Die Lagerkassette ist als eine zu dem Pitchrohr und zu der Getriebewelle separate, insbesondere vormontierbare, Baueinheit ausgestaltet, die entweder mit der Getriebewelle oder mit dem Pitchrohr über den Befestigungsflansch befestigt ist. Die Befestigung der Lagerkassette mit dem Befestigungsflansch ermöglicht eine besonders einfache und kostengünstige elektrische Isolierung des Pitchrohrs gegenüber dem Getriebe, indem der Befestigungsflansch mit Hilfe des mindestens einen ersten Befestigungselements mit dem Isolationselement und das Isolationselement wiederum über das mindestens eine zweite Befestigungselement mit der Lagerkassette befestigt wird. In der Bauteilkette Befestigungsflansch, erstes Befestigungselement, Isolationselement, zweites Befestigungselement und Lagerkassette ist zwischen dem ersten Befestigungselement und dem zweiten Befestigungselement durch das Isolationselement ein ausreichend wirksames Dielektrikum vorgesehen, dass selbst an der engsten Stelle zwischen elektrisch leitenden Bauteilen der Lageranordnung, bei denen es sich in der Regel um die aufeinander zu weisenden Ende des ersten Befestigungselements und des zweiten Befestigungselements handelt, ein Spannungsüberschlag im regulären Betrieb der Windkraftanlage sicher vermieden werden kann. Mit Hilfe der über das Isolationselement elektrisch isolierend befestigten Lagerkassette ist kostengünstig und einfach eine mechanisch und elektrisch betriebssicherere Durchführung des Pitchrohrs durch das Getriebe einer Windkraftanlage ermöglicht.

Wenn der Befestigungsflansch, insbesondere einstückig, von der Getriebewelle ausgebildet ist, ist die Lagerkassette drehfest mit der Getriebewelle verbunden und bewirkt eine Lagerung und Abdichtung des relativ zu der Getriebewelle und zu der Lagerkassette drehbaren Pitchrohrs. Die Lagerkassette kann mit der Getriebewelle mitdrehend ausgeführt sein. Wenn der Befestigungsflansch, insbesondere einstückig, von dem Pitchrohr ausgebildet ist, ist die Lagerkassette drehfest mit dem Pitchrohr verbunden und bewirkt eine Lagerung und Abdichtung des relativ zu dem Pitchrohr und zu der Lagerkassette drehbaren Getriebewelle. Die Lagerkassette kann mit dem Pitchrohr mitdrehend verbunden sein. Nachfolgend wird die Erfindung exemplarisch am Beispiel eines von der Getriebewelle ausgebildeten Befestigungsflansch erläutert, wobei die nachfolgenden Erläuterungen für die kinematische Umkehrung eines von dem Pitchrohr ausgebildeten Befestigungsflansch analog gelten sollen.

Die Getriebewelle ist insbesondere eine Getriebeausgangswelle zum Einleiten eines in einem Getriebe gewandelten Drehmoments in einen Generator. Zusätzlich oder alternativ kann die Getriebewelle auch eine Getriebeeingangswelle zum Einleiten eines von einem Rotor der Windkraftanlage kommenden Drehmoments in das Getriebe. Die Getriebewelle ist insbesondere als eine sich über ihre gesamte axiale Erstreckung erstreckdeckende Hohlwelle ausgestaltet. Vorzugsweise ist mit der Getriebewelle ein Sonnenrad einer Planetenstufe des Getriebes drehmomentübertragend befestigt, so dass die Getriebewelle gleichzeitig eine Sonnenwelle der Planetenstufe darstellen kann.

Das Isolationselement kann aus einem elektrisch nicht leitfähigen Material, beispielsweise einem polymeren Nichtleiter, beispielsweise ein thermoplastischer Kunststoff, hergestellt sein. Von dem Generator in das Pitchrohr induzierte Ströme und/oder Streu- beziehungsweise Leckageströme des Generators können dadurch nicht in das Getriebe gelangen und dort Schäden anrichten. Das Isolationselement kann aus einem vergleichsweise harten dielektrischen Isolationsmaterial hergestellt sein. Dies ermöglicht es die an der Lagerkassette auftretenden Lagerkräfte über das Isolationselement an den Befestigungsflansch abstützen zu können. Das Isolationselement kann einen scheibenartigen Bereich aufweisen, der an einer Axialseite flächig an dem Befestigungsflansch anliegen und mit Hilfe des mindestens einen ersten Befestigungselement befestigt sein. An der von dem Befestigungsflansch wegweisenden Axialseite und/oder an einer seiner in radialer Richtung weisenden Mantelflächen kann die Lagerkassette flächig anliegen und mit Hilfe des mindestens einen zweiten Befestigungselement befestigt sein.

Das erste Befestigungselement und/oder das zweite Befestigungselement kann beispielsweise als Schraubenverbindung und/oder Nietverbindung ausgestaltet sein. Beispielsweise kann das Isolationselement für das jeweilige erste Befestigungselement und/oder für das jeweilige zweite Befestigungselement ein Innengewinde zum Einschrauben einer Schraube aufweisen. Es ist auch möglich, dass das Isolationselement für das jeweilige Befestigungselement eine Durchgangsöffnung aufweist und das jeweilige Befestigungselement das Isolationselement zwischen einem Kopf, beispielsweise Schraubenkopf oder Setzkopf, und einem Konterelement, beispielsweise Schraubenmutter oder Schließkopf, verklemmt ist. Hierbei ist insbesondere das Konterelement oder der Kopf des jeweiligen Befestigungselements, insbesondere aufgrund einer geringeren Materialdicke des Isolationselements, in dem Isolationselement versenkt positioniert. Dadurch kann bei einem geringen Bauraumbedarf der Abstand zwischen dem ersten Befestigungselement und dem zweiten Befestigungselement groß genug ausgebildet werden, um einen gewünschten Schutz gegen einen Spannungsüberschlag sicherzustellen.

Insbesondere ist das erste Befestigungselement zu dem zweiten Befestigungselement und zu der Lagerkassette soweit beabstandet, dass das erste Befestigungselement von dem Isolationselement gegenüber dem Pitchrohr elektrisch isoliert ist, und das zweite Befestigungselement zu dem Befestigungsflansch soweit beabstandet ist, dass das zweite Befestigungselement von dem Isolationselement gegenüber der Getriebewelle elektrisch isoliert ist. Das erste Befestigungselement ist über das Material des Isolationselements zu der Lagerkassette elektrisch isolierend beabstandet. Zusätzlich ist das zweite Befestigungselement über das Material des Isolationselements zu dem Pitchrohr elektrisch isolierend beabstandet.

Ebenfalls sind das erste Befestigungselement und das zweite Befestigungselement über das Material des Isolationselements elektrisch isolierend zueinander beabstandet. Eine direkte Verbindung des ersten Befestigungselements mit der Lagerkassette sowie eine direkte Verbindung des zweiten Befestigungselements mit dem Pitchrohr sind vermieden, wobei auch ein direkter Kontakt zwischen dem ersten Befestigungselement und dem zweiten Befestigungselement vermieden ist. Dadurch kann eine ausreichende elektrische Isolierung des Pitchrohrs zur Getriebewelle und dem übrigen Getriebe sichergestellt werden.

Vorzugsweise sind das erste Befestigungselement und das zweite Befestigungselement in axialer Richtung derart zueinander beabstandet, dass in tangentialer Richtung betrachtet ein nicht überlappender Versatz zwischen dem ersten Befestigungselement und dem zweiten Befestigungselement gegeben ist. Der axiale Versatz zwischen dem ersten Befestigungselement und dem zweiten Befestigungselement kann bereits alleine oder in Kombination mit weiteren Vorgaben zur relativen Positionierung des mindestens einen Befestigungselements relativ zu dem mindestens einen zweiten Befestigungselement eine ausreichende elektrische Isolierung bereitstellen, die mit weiteren geeigneten Vorgaben zur relativen Positionierung besonders bauraumsparend realisiert werden kann.

Besondres bevorzugt sind das erste Befestigungselement und das zweite Befestigungselement in radialer Richtung derart zueinander beabstandet, dass in axialer Richtung betrachtet ein nicht überlappender Versatz zwischen dem ersten Befestigungselement und dem zweiten Befestigungselement gegeben ist. Der radiale Versatz zwischen dem ersten Befestigungselement und dem zweiten Befestigungselement kann bereits alleine oder in Kombination mit weiteren Vorgaben zur relativen Positionierung des mindestens einen Befestigungselements relativ zu dem mindestens einen zweiten Befestigungselement eine ausreichende elektrische Isolierung bereitstellen, die mit weiteren geeigneten Vorgaben zur relativen Positionierung besonders bauraumsparend realisiert werden kann.

Insbesondere sind das erste Befestigungselement und das zweite Befestigungselement in Umfangsrichtung derart zueinander beabstandet, dass in radialer Richtung betrachtet ein nicht überlappender Versatz zwischen dem ersten Befestigungselement und dem zweiten Befestigungselement gegeben ist. Der Umfangswinkelversatz zwischen dem ersten Befestigungselement und dem zweiten Befestigungselement kann bereits alleine oder in Kombination mit weiteren Vorgaben zur relativen Positionierung des mindestens einen Befestigungselements relativ zu dem mindestens einen zweiten Befestigungselement eine ausreichende elektrische Isolierung bereitstellen, die mit weiteren geeigneten Vorgaben zur relativen Positionierung besonders bauraumsparend realisiert werden kann.

Vorzugsweise weist die Lagerkassette ein erstes Kassettenteil zur Abstützung eines Lagers, insbesondere Wälzlager, in einer ersten Axialrichtung und ein mit dem ersten Kassettenteil verbundenes zweites Kassettenteil zur Abstützung des Lagers in einer der ersten Axialrichtung entgegengesetzten zweiten Axialrichtung auf, wobei vorzugsweise das erste Kassettenteil eine Dichtung, vorzugsweise eine berührungslose oder berührende Dichtung, insbesondere einen Radialwellendichtring, eine Spaltdichtung und/oder eine Labyrinthdichtung, aufweist und/oder weiter bevorzugt das Isolationselement flächig zumindest an dem zweiten Kassettenteil anliegt. Das erste Kassettenteil und das zweite Kassettenteil können insbesondere einen Außenring oder einen Innenring des beispielsweise als Festlager oder Loslager ausgestalteten Wälzlagers axial festlegen und/oder axial verklemmen. Hierbei kann das erste Kassettenteil gleichzeitig die Dichtung aufnehmen oder selber ausbilden. Das erste Kassettenteil kann insbesondere ein so geringe Spielpassung mit dem abzudichtenden Bauteil, das heißt Pitchrohr oder Getriebewelle, aufweisen, dass eine Abdichtung gegen Schmierfett und/oder Schmieröl gegeben ist und eine berühungslose Dichtung, insbesondere eine Spaltdichtung, ausgebildet ist. Vorzugsweise weist das erste Kassettenteil eine mehrere Nuten aufweisende Nabe auf, so dass das erste Kassettenteil eine Labyrinthdichtung ausbilden kann. Es ist aber auch möglich eine separat ausgeführte Dichtung, beispielsweise einen Radialwellendichtring, mit dem erste Kassettenteil zu verbinden, insbesondere um eine berührende Dichtung ausbilden zu können. Das erste Kassettenteil und das zweite Kassettenteil können mit Hilfe des sowieso vorgesehenen zweiten Befestigungselement miteinander verbunden sein. Zusätzlich oder alternativ können das erste Kassettenteil und das zweite Kassettenteil mit Hilfe mindestens eines zu dem ersten Befestigungselement und zu dem zweiten Befestigungselement separat ausgeführten dritten Befestigungselement miteinander verbunden sein. Das zweite Kassettenteil kann insbesondere eine Einführungsschräge aufweisen, um durch eine axiale Relativbewegung das zweite Kassettenteil und das Isolationselement ineinander aufstecken zu können. Durch den flächigen Kontakt kann eine Einstecktiefe definiert vorgegeben werden. Besonders bevorzugt liegt das Isolationselement sowohl an dem ersten Kassettenteil als auch an dem zweiten Kassettenteil flächig an.

Besonders bevorzugt ist vorgesehen, dass das Isolationselement eine berührungslose Dichtung, insbesondere Spaltdichtung oder Labyrinthdichtung, zu einer relativ zu der Lagerkassette drehbaren Mantelfläche ausbildet. Das Isolationselement kann dadurch zusätzlich die Funktion einer berührungslosen Dichtung erfüllen. Insbesondere kann das erste Kassettenteil an der einen Axialseite des Lagers abdichten, während an der anderen Axialseite des Lagers das Isolationselement gegebenenfalls unterstützt von einer Dichtwirkung des zweiten Kassettenteils abdichtet. Dadurch kann insbesondere in Schmiermittel zur Schmierung des Lagers in dem Lager zurückgehalten werden.

Insbesondere ist vorgesehen, dass das Isolationselement eine Axialseite eines/des Lagers der Lagerkassette abdichtet. Das Isolationselement, insbesondere nur das Isolationselement alleine, kann an einer Axialseite des Lagers Schmiermittel zur Schmierung des Lagers in dem Lager zurückhalten.

Vorzugsweise ist die Lagerkassette zur Abstützung radialer Kräfte zwischen dem Pitchrohr und der Getriebewelle ausgestaltet. Hierbei kann berücksichtigt werden, dass das Pitchrohr aufgrund seiner besonders langen axialen Länge aufgrund seines Eigengewichts und/oder von dem Rotor der Windkraftanlage und/oder von dem Rotor des Generators induzierten Biegemomenten in radialer Richtung durchhängen beziehungsweise durchbiegen kann. Dies wird insbesondere dadurch verstärkt, dass der aus dem Rotor, dem Getriebe und dem Generator zusammengesetzte Antriebsstrang zur Horizontalen, beispielsweise um ca. 5°, angeschrägt verlaufen kann. Die Lagerkassette kann das Pitchrohr nicht nur lagern und abdichten, sondern auch in radialer Richtung und gegebenenfalls zusätzlich in axialer Richtung abstützen, wodurch eine Durchbiegung des Pitchrohrs über eine große axiale Strecke vermieden und das Pitchrohr versteift wird. Die mechanische Belastung des Pitchrohrs kann dadurch reduziert werden und die Betriebssicherheit weiter verbessert werden.

Besonders bevorzugt sind das erste Befestigungselement und das zweite Befestigungselement in axialer Richtung ausgerichtet, wobei das das erste Befestigungselement und das zweite Befestigungselement in radialer Richtung betrachtet von dem Pitchrohr und/oder von der Getriebewelle vollständig überdeckt sind. Die Lagerkassette und die Befestigung der Lagerkassette mit Hilfe des ersten Befestigungselements und des zweiten Befestigungselements kann dadurch im Inneren der Getriebewelle und vorzugsweise im Inneren eines Getriebegehäuses des Getriebes versenkt vorgesehen sein. Eine Zugänglichkeit des ersten Befestigungselements und des zweiten Befestigungselements ist über einen zwischen dem Pitchrohr und der Getriebewelle ausgebildeten Ringraum gegeben, so dass an einem axialen Ende der Getriebewelle ein Werkzeug in den Ringraum eingeführt werden kann, um die Befestigung des Lagerkassette herbeizuführen. Die Lagerkassette ist dadurch gegen Umwelteinflüsse geschützt verbaut.

Insbesondere ist ein/das Lager der Lagerkassette mit Schmierfett und/oder Schmieröl geschmiert. Durch die Dichtfunktion der Lagerkassette kann ein Eindringen von Staub, Flüssigkeit oder sonstigen Verunreinigungen in das Lager vermieden werden, wobei gleichzeitig ein Austreten von Schmiermittel in Form von Schmierfett und/oder Schmieröl aus dem Lager vermieden werden kann. Durch die Schmierung des Lagers kann die Haltbarkeit des Lagers verbessert und die Ausfallwahrscheinlichkeit reduziert werden.

Vorzugsweise sind das Pitchrohr, die Lagerkassette, der Befestigungsflansch und die Getriebewelle aus einem elektrisch leitfähigen Material, insbesondere Stahl, hergestellt. Die Herstellungskosten können dadurch gering gehalten werden. Gleichzeitig ist durch das Isolationselement eine ausreichende elektrische Isolierung zwischen dem Pitchrohr und dem Getriebe gegeben, dass die Verwendung elektrisch leitfähiger Materialen nicht zu Nachteilen führt.

Ein weiterer Aspekt der Erfindung betrifft einen Antriebsstrang für eine Windkraftanlage mit einer mit einem windkraftangetriebenen Rotor verbindbaren Rotorwelle, einer Motorwelle einer im Generatormodus betreibbaren elektrischen Maschine, einem die Rotorwelle mit der Motorwelle drehmomentübertragend verbindenden Getriebe zur Wandlung eines Drehmoments und einer Drehzahl und einem das Getriebe in axialer Richtung durchdringenden Pitchrohr, wobei das Pitchrohr in dem Getriebe von mindestens einer Lageranordnung, die wie vorstehend beschrieben aus- und weitergebildet sein kann, elektrisch isoliert gelagert ist. Der Antriebsstrang kann insbesondere wie vorstehend beschrieben aus- und weitergebildet sein. Mit Hilfe der über das Isolationselement elektrisch isolierend befestigten Lagerkassette ist kostengünstig und einfach eine mechanisch und elektrisch betriebssicherere Durchführung des Pitchrohrs durch das Getriebe der Windkraftanlage ermöglicht. Vorzugsweise ist sowohl an einer zum Rotor weisenden Axialseite des Getriebes als auch an einer zum Generator weisenden Axialseite des Getriebes jeweils eine Lageranordnung vorgesehen. Dadurch kann die eine Lageranordnung mit der Eingangswelle des Getriebes und dem Pitchrohr zusammenwirken, wobei die Eingangswelle des Getriebes insbesondere mit der Rotorwelle zusammenfällt oder mit der Rotorwelle verbunden ist, während die andere Lageranordnung mit der Ausgangswelle des Getriebes und dem Pitchrohr zusammenwirkt, wobei die Ausgangswelle des Getriebes insbesondere mit der Motorwelle zusammenfällt oder mit der Motorwelle verbunden ist.

Ein weiterer Aspekt der Erfindung betrifft eine Windkraftanlage zur Erzeugung elektrischer Energie aus Windenergie, mit einem Rotor zur Bereitstellung eines Drehmoments aus Windenergie, einem mit dem Rotor gekoppelten Getriebe zur Wandlung des Drehmoments und einem Generator zur Erzeugung elektrischer Energie aus dem von dem Getriebe eingeleiteten Drehmoment, wobei der Rotor, das Getriebe und der Generator koaxial zueinander angeordnet sind und ein Pitchrohr von dem Generator durch das Getriebe bis zu dem Rotor führt, wobei das Pitchrohr in dem Getriebe von mindestens einer Lageranordnung, die wie vorstehend beschrieben aus- und weitergebildet sein kann, elektrisch isoliert gelagert ist. Der Windkraftanlage kann insbesondere wie vorstehend beschrieben aus- und weitergebildet sein. Mit Hilfe der über das Isolationselement elektrisch isolierend befestigten Lagerkassette ist kostengünstig und einfach eine mechanisch und elektrisch betriebssicherere Durchführung des Pitchrohrs durch das Getriebe der Windkraftanlage ermöglicht. Vorzugsweise ist sowohl an einer zum Rotor weisenden Axialseite des Getriebes als auch an einer zum Generator weisenden Axialseite des Getriebes jeweils eine Lageranordnung vorgesehen. Dadurch kann die eine Lageranordnung mit der Eingangswelle des Getriebes und dem Pitchrohr zusammenwirken, wobei die Eingangswelle des Getriebes insbesondere mit der Rotorwelle zusammenfällt oder mit der Rotorwelle verbunden ist, während die andere Lageranordnung mit der Ausgangswelle des Getriebes und dem Pitchrohr zusammenwirkt, wobei die Ausgangswelle des Getriebes insbesondere mit der Motorwelle zusammenfällt oder mit der Motorwelle verbunden ist.

Ein weiterer Aspekt der Erfindung betrifft ein Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Lageranordnung, die wie vorstehend beschrieben aus- und weitergebildet sein kann, vorgesehenen Bestandteile, wobei die Datenpakete dazu hergerichtet sind bei einer Verarbeitung durch eine Datenverarbeitungseinrichtung eine additive Herstellung der Bestandteile der Lageranordnung durch 3D-Druck und/oder eine Simulation der auf Basis der in den Datenpaketen bezüglich Formgestaltung, Materialeigenschaften und physikalischer Wechselwirkungen hinterlegten Daten beruhenden Funktionsweise der Lageranordnung durchzuführen. Das Datenagglomerat kann in der Art eines sogenannten "digital twin" eine virtuelle Verkörperung einer im vorliegenden Fall als die Lageranordnung ausgestalteten Vorrichtung darstellen, die eine virtuelle Untersuchung in Form einer Simulation oder eine reale Vergegenständlichung mit Hilfe eines additiven Fertigungsverfahrens ermöglicht. Die Datenpakete können hierbei Daten über die Formgestaltung der verschiedenen Bauteile der Vorrichtung umfassen, wie sie für eine additive Fertigung durch 3D-Druck benötigt werden. Die Datenpakete können vorzugsweise zusätzlich Daten über die Materialeigenschaften der verschiedenen Bauteile der Vorrichtung und/oder der physikalischen Wechselwirkungen zwischen den verschiedenen Bauteilen der Vorrichtung umfassen, um deren Funktionsweise in einer hierzu geeigneten Simulationsumgebung computerbasiert zu simulieren, beispielsweise um mechanische Eigenschaften, wie Verformung, Kraftbelastung, Momentbelastung, insbesondere auf der Basis einer Finite-Elemente-Analyse zu untersuchen und/oder eine Wärmeerzeugung und/oder eine Wärmeverteilungen der verschiedenen Bauteile der Vorrichtung zu untersuchen. Hierbei kann insbesondere jeweils ein Datenpaket einen separat ausgeführten Bestandteil der jeweiligen zugeordneten Vorrichtung abbilden, so dass die einzelnen Bestandteile in ihrer Relativlage und/oder Relativbeweglichkeit und/oder ihrer Kraft- und/oder Wärmeübertragung leicht tatsächlich und/oder virtuell zusammengesetzt werden können, um die erfindungswesentlichen Wechselwirkungen zu realisieren. Dies ermöglicht eine kostengünstige Herstellung von Prototypen und/oder computerbasierten Simulationen, um die Funktionsweise der Vorrichtung zu studieren, Probleme im konkreten Anwendungsfall zu identifizieren und Verbesserungen zu finden. Mit Hilfe der über das Isolationselement elektrisch isolierend befestigten Lagerkassette ist kostengünstig und einfach eine mechanisch und elektrisch betriebssicherere Durchführung des Pitchrohrs durch das Getriebe einer Windkraftanlage ermöglicht, was mit Hilfe des Datenagglomerats leicht und kostengünstig überprüft werden kann.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische perspektivische Ansicht einer Windkraftanlage,
Fig. 2: eine schematische Schnittansicht einer ersten Ausführungsform einer Lageranordnung für die Windkraftanlage aus Fig. 1 und
Fig. 3: eine schematische Schnittansicht einer zweiten Ausführungsform einer Lageranordnung für die Windkraftanlage aus Fig. 1.

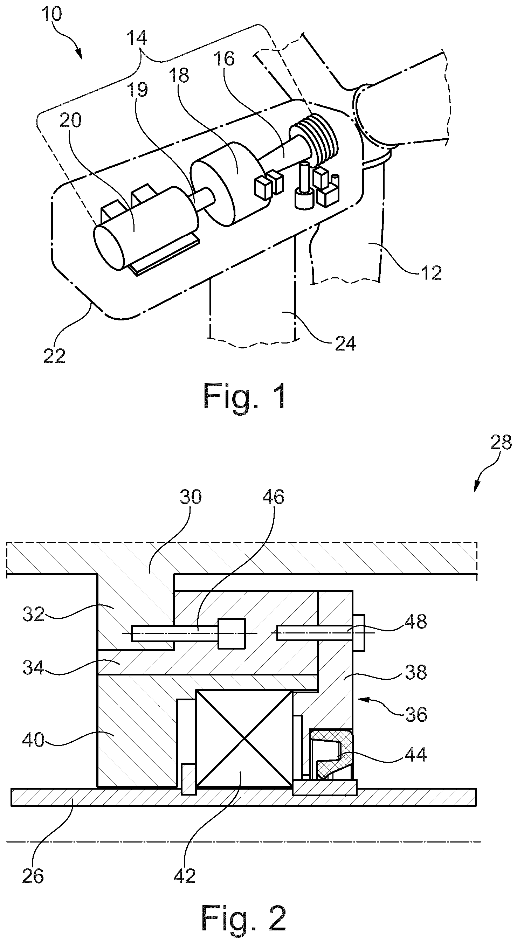

Die in Fig. 1 dargestellte Windkraftanlage 10 kann zur Erzeugung von elektrischer Energie aus Windkraft verwendet werden. Hierzu weist die Windkraftanlage 10 einen Rotor 12 auf, der durch Wind windkraftbetrieben in Drehung versetzt werden kann. Der Rotor 12 ist an einen Antriebsstrang 14 angekoppelt. Hierzu ist der Rotor 12 mit einer Rotorwelle 16 verbunden, die innerhalb des Antriebsstrangs 14 mit einem Getriebe 18 gekoppelt ist, um das über den Rotor 12 und die Rotorwelle 16 eingeleitete Drehmoment zu wandeln. Das in dem Getriebe 18 gewandelte Drehmoment wird über eine Motorwelle 19 einer im Generatormodus betriebenen elektrischen Maschine zugeführt, die einen Generator 20 ausbilden kann. Die von der elektrischen Maschine erzeugte elektrische Energie kann einer wiederaufladbaren Batterie und/oder einem Stromnetz zugeführt werden. Der Antriebsstrang 14 ist im dargestellten Ausführungsbeispiel vollständig in einer Gondel 22 untergebracht, die an einem oberen freien Ende eines Standturms 24 angebracht ist. Der Rotor 12, das Getriebe 18 und der Generator 20 können koaxial zueinander angeordnet sein und vorzugsweise zur Horizontalen angeschrägt verlaufen. Von dem Generator 20 kann durch das Getriebe 18 hindurch bis zum Rotor 12 ein Pitchrohr 26 verlaufen, um elektrische Leitungen zu einer Blatteinstellwinkelregelung (Pitchregelung) des Rotors führen zu können.

Wie in Fig. 2 dargestellt ist, kann das Pitchrohr 26 in einer beispielsweise generatorseitigen und/oder rotorseitigen Lageranordnung 28 in oder in der Nähe des Getriebes 18 gelagert sein. Die Lageranordnung 28 weist eine Getriebewelle 30 auf, bei er sich beispielsweise um die als Getriebeeingangswelle wirkende Rotorwelle 16 oder die als Getriebeausgangswelle wirkende Motorwelle 19 handeln kann. Die Getriebewelle 30 ist als Hohlwelle ausgestaltete, aus deren axialen Enden das Pitchrohr 26 herausragen kann. Im dargestellten Ausführungsbeispiel ist es die Getriebewelle 30, die einen insbesondere einstückigen Befestigungsflansch 32 aufweist, mit dem mittelbar über ein Isolationselement 34 eine das relativ drehbare Pitchrohr 26 lagernde Lagerkassette 36 befestigt ist. Alternativ kann der Befestigungsflansch 32 von dem Pitchrohr 26ausgebildet sein und die Lagerkassette 36 die in diesem Fall relativ drehbare Getriebewelle 30 lagern. Die Lagerkassette 36 weist ein erstes Kassettenteil 38 und ein mit dem ersten Kassettenteil 38 verbundenes zweites Kassettenteil 40 auf zwischen denen ein Lager 42, insbesondere ein Wälzlager, in einer definierten Axialposition aufgenommen ist. Das erste Kassettenteil 38 kann an einer Axialseite das insbesondere mit einem Schmiermittel geschmierte Lager 42 abdichten, wobei hierzu im dargestellten Ausführungsbeispiel ein als Radialwellendichtring 44 ausgestaltetes Dichtelement eine berührende Dichtung ausbildet. An der anderen Axialseite des Lagers 42 kann das zweite Kassettenteil 40 eine berührungsloses Spaltdichtung mit dem Pitchrohr 26 ausbilden.

Damit aus dem Generator stammende und beispielsweise durch Induktion induzierte elektrische Ströme des Pitchrohrs 26 nicht infolge eines Spannungsüberschlags in das Getriebe 18 beziehungsweise in die Getriebewelle 30 gelangen können, ist durch das Isolationselement 34 eine ausreichende elektrische Isolierung gegeben. Hierzu ist das Isolationselement 34 mit Hilfe mindestens eines ersten Befestigungselements 46 mit dem Befestigungsflansch 32 befestigt, während das Isolationselement 36 mit Hilfe mindestens eines zweiten Befestigungselements 48 mit der Lagerkassette 36 befestigt ist. Das erste Befestigungselement 46 und/oder das zweite Befestigungselement 46 kann insbesondere als Schraube ausgestaltet sein, die vorzugsweise mit einem zugehörigen Innengewinde zusammenwirkt. Das erste Befestigungselement 46 und/oder das zweite Befestigungselement 46 ist insbesondere in axialer Richtung ausgerichtet. Insbesondere sind mehrere erste Befestigungselemente 46 vorgesehen, die vorzugsweise in Umfangsrichtung gleichmäßig verteilt sind und/oder auf einem gemeinsamen Radius angeordnet sind. Insbesondere sind mehrere zweite Befestigungselemente 48 vorgesehen, die vorzugsweise in Umfangsrichtung gleichmäßig verteilt sind und/oder auf einem gemeinsamen Radius angeordnet sind. Das erste Befestigungselement 46 und das zweite Befestigungselement 48 sind soweit zueinander beabstandet, dass an der engsten Stelle zwischen dem ersten Befestigungselement 46 und dem zweiten Befestigungselement 48 ausreichend viel Material des Isolationselements 36 verbleibt, um die gewünschte elektrische Isolierung sicherzustellen.

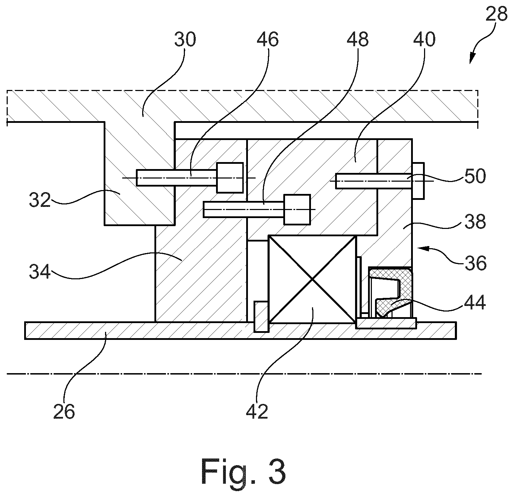

Bei der in Fig. 3 dargestellten Ausführungsform der Lageranordnung 28 ist im Vergleich zu der in Fig. 2 dargestellten Ausführungsform der Lageranordnung 28 eine Spaltdichtung an dem Pitchrohr 26 an der von dem ersten Kassettenteil 38 wegweisenden Axialseite des Lagers 42 durch das Isolationselement 36 ausgebildet. Zudem ist ein drittes Befestigungselement 50 zu erkennen, welches das erste Kassettenteil 38 mit dem zweiten Kassettenteil 40 verbindet. Das dritte Befestigungselement 50 kann insbesondere als Schraube ausgestaltet sein, die vorzugsweise mit einem zugehörigen Innengewinde zusammenwirkt. Das dritte Befestigungselement 50 ist insbesondere in axialer Richtung ausgerichtet. Insbesondere sind mehrere dritte Befestigungselemente 50 vorgesehen, die vorzugsweise in Umfangsrichtung gleichmäßig verteilt sind und/oder auf einem gemeinsamen Radius angeordnet sind. Auch bei der in Fig. 3 dargestellten Ausführungsform der Lageranordnung 28 kann alternativ der Befestigungsflansch 32 von dem Pitchrohr 26ausgebildet sein und die Lagerkassette 36 die in diesem Fall relativ drehbare Getriebewelle 30 lagern.

## Patentansprüche

1. Lageranordnung (28) für ein Pitchrohr einer Windkraftanlage (10), mit
einer Getriebewelle (30),
einer Lagerkassette (36) zur Lagerung und Abdichtung des Pitchrohrs (26) gegenüber der Getriebewelle (30),
einem von der Getriebewelle (30) oder von dem Pitchrohr (26) ausgebildeten Befestigungsflansch (32) zur drehfesten Befestigung der Lagerkassette (36) und einem über ein erstes Befestigungselement (46) mit dem Befestigungsflansch (32) und über ein zweites Befestigungselement (48) mit der Lagerkassette (36) befestigtes Isolationselement (34) zur elektrischen Isolation des Pitchrohrs (26) gegenüber der Getriebewelle (30).

2. Lageranordnung (28) nach Anspruch 1, wobei das erste Befestigungselement (46) zu dem zweiten Befestigungselement (48) und zu der Lagerkassette (36) soweit beabstandet ist, dass das erste Befestigungselement (46) von dem Isolationselement (34) gegenüber dem Pitchrohr (26) elektrisch isoliert ist, und das zweite Befestigungselement (48) zu dem Befestigungsflansch (32) soweit beabstandet ist, dass das zweite Befestigungselement (48) von dem Isolationselement (34) gegenüber der Getriebewelle (30) elektrisch isoliert ist.

3. Lageranordnung (28) nach Anspruch 1 oder 2, wobei das erste Befestigungselement (46) und das zweite Befestigungselement (48) in axialer Richtung derart zueinander beabstandet sind, dass in tangentialer Richtung betrachtet ein nicht überlappender Versatz zwischen dem ersten Befestigungselement (46) und dem zweiten Befestigungselement (48) gegeben ist.

4. Lageranordnung (28) nach einem der Ansprüche 1 bis 3, wobei das erste Befestigungselement (46) und das zweite Befestigungselement (48) in radialer Richtung derart zueinander beabstandet sind, dass in axialer Richtung betrachtet ein nicht überlappender Versatz zwischen dem ersten Befestigungselement (46) und dem zweiten Befestigungselement (48) gegeben ist.

5. Lageranordnung (28) nach einem der Ansprüche 1 bis 4, wobei das erste Befestigungselement (46) und das zweite Befestigungselement (48) in Umfangsrichtung derart zueinander beabstandet sind, dass in radialer Richtung betrachtet ein nicht überlappender Versatz zwischen dem ersten Befestigungselement (46) und dem zweiten Befestigungselement (48) gegeben ist.

6. Lageranordnung (28) nach einem der Ansprüche 1 bis 5, wobei die Lagerkassette (36) ein erstes Kassettenteil (38) zur Abstützung eines Lagers (42), insbesondere Wälzlager, in einer ersten Axialrichtung und ein mit dem ersten Kassettenteil (38) verbundenes zweites Kassettenteil (40) zur Abstützung des Lagers (42) in einer der ersten Axialrichtung entgegengesetzten zweiten Axialrichtung aufweist, wobei das erste Kassettenteil (38) eine Dichtung, insbesondere einen Radialwellendichtring (44), eine Spaltdichtung und/oder eine Labyrinthdichtung, aufweist und das Isolationselement (34) flächig zumindest an dem zweiten Kassettenteil (40) anliegt.

7. Lageranordnung (28) nach einem der Ansprüche 1 bis 6, wobei das Isolationselement (34) eine berührungslose Dichtung, insbesondere Spaltdichtung oder Labyrinthdichtung, zu einer relativ zu der Lagerkassette (36) drehbaren Mantelfläche ausbildet.

8. Lageranordnung (28) nach Anspruch 7, wobei das Isolationselement (34) eine Axialseite eines/des Lagers (42) der Lagerkassette (36) abdichtet.

9. Lageranordnung (28) nach einem der Ansprüche 1 bis 8, wobei die Lagerkassette (36) zur Abstützung radialer Kräfte zwischen dem Pitchrohr (26) und der Getriebewelle (30) ausgestaltet ist.

10. Lageranordnung (28) nach einem der Ansprüche 1 bis 9, wobei das erste Befestigungselement (46) und das zweite Befestigungselement (48) in axialer Richtung ausgerichtet sind, wobei das das erste Befestigungselement (46) und das zweite Befestigungselement (48) in radialer Richtung betrachtet von dem Pitchrohr (26) und/oder von der Getriebewelle (30) vollständig überdeckt sind.

11. Lageranordnung (28) nach einem der Ansprüche 1 bis 10, wobei ein/das Lager (42) der Lagerkassette (36) mit Schmierfett und/oder Schmieröl geschmiert ist.

12. Lageranordnung (28) nach einem der Ansprüche 1 bis 11, wobei das Pitchrohr (26), die Lagerkassette (36), der Befestigungsflansch (32) und die Getriebewelle (30) aus einem elektrisch leitfähigen Material, insbesondere Stahl, hergestellt sind.

13. Antriebsstrang (14) für eine Windkraftanlage (10) mit einer mit einem windkraftangetriebenen Rotor (12) verbindbaren Rotorwelle (16), einer Motorwelle (19) einer im Generatormodus betreibbaren elektrischen Maschine (20), einem die Rotorwelle (16) mit der Motorwelle (19) drehmomentübertragend verbindenden Getriebe (18) zur Wandlung eines Drehmoments und einer Drehzahl und einem das Getriebe (18) in axialer Richtung durchdringenden Pitchrohr (26), wobei das Pitchrohr (26) in dem Getriebe (18) von mindestens einer Lageranordnung (28) nach einem der Ansprüche 1 bis 12 elektrisch isoliert gelagert ist

14. Windkraftanlage (10) zur Erzeugung elektrischer Energie aus Windenergie, mit einem Rotor (12) zur Bereitstellung eines Drehmoments aus Windenergie, einem mit dem Rotor (12) gekoppelten Getriebe (18) zur Wandlung des Drehmoments und einem Generator (20) zur Erzeugung elektrischer Energie aus dem von dem Getriebe (18) eingeleiteten Drehmoment, wobei der Rotor (12), das Getriebe (18) und der Generator (20) koaxial zueinander angeordnet sind und ein Pitchrohr (26) von dem Generator (20) durch das Getriebe (18) bis zu dem Rotor (12) führt, wobei das Pitchrohr (26) in dem Getriebe (18) von mindestens einer Lageranordnung (28) nach einem der Ansprüche 1 bis 12 elektrisch isoliert gelagert ist.

15. Datenagglomerat mit in einer gemeinsamen Datei zusammengefassten oder über verschiedene Dateien verteilten Datenpaketen zur Abbildung der dreidimensionalen Formgestaltung und/oder der Wechselwirkungen sämtlicher in der Lageranordnung (28) nach einem der Ansprüche 1 bis 12 vorgesehenen Bestandteile, wobei die Datenpakete dazu hergerichtet sind bei einer Verarbeitung durch eine Datenverarbeitungseinrichtung eine additive Herstellung der Bestandteile der Lageranordnung (28) durch 3D-Druck und/oder eine Simulation der auf Basis der in den Datenpaketen bezüglich Formgestaltung, Materialeigenschaften und physikalischer Wechselwirkungen hinterlegten Daten beruhenden Funktionsweise der Lageranordnung (28) durchzuführen.

## Claims

1. Bearing assembly (28) for a pitch tube of a wind power plant (10), with
a transmission shaft (30),
a bearing cartridge (36) for mounting and sealing the pitch tube (26) with respect to the transmission shaft (30),
a fastening flange (32) which is configured by the transmission shaft (30) or by the pitch tube (26) for fastening the bearing cartridge (36) in a non-rotational manner, and
an insulation element (34) which is fastened via a first fastening element (46) to the fastening flange (32) and via a second fastening element (48) to the bearing cartridge (36) for the electrical insulation of the pitch tube (26) with respect to the transmission shaft (30).

2. Bearing assembly (28) according to Claim 1, the first fastening element (46) being spaced apart from the second fastening element (48) and from the bearing cartridge (36) to such an extent that the first fastening element (46) is insulated electrically with respect to the pitch tube (26) by the insulation element (34), and the second fastening element (48) being spaced apart from the fastening flange (32) to such an extent that the second fastening element (48) is insulated electrically with respect to the transmission shaft (30) by the insulation element (34).

3. Bearing assembly (28) according to Claim 1 or 2, the first fastening element (46) and the second fastening element (48) being spaced apart from one another in the axial direction in such a way that, as viewed in the tangential direction, there is a non-overlapping offset between the first fastening element (46) and the second fastening element (48).

4. Bearing assembly (28) according to one of Claims 1 to 3, the first fastening element (46) and the second fastening element (48) being spaced apart from one another in the radial direction in such a way that, as viewed in the axial direction, there is a non-overlapping offset between the first fastening element (46) and the second fastening element (48).

5. Bearing assembly (28) according to one of Claims 1 to 4, the first fastening element (46) and the second fastening element (48) being spaced apart from one another in the circumferential direction in such a way that, as viewed in the radial direction, there is a non-overlapping offset between the first fastening element (46) and the second fastening element (48).

6. Bearing assembly (28) according to one of Claims 1 to 5, the bearing cartridge (36) having a first cartridge part (38) for supporting a bearing (42), in particular an anti-friction bearing, in a first axial direction, and a second cartridge part (40), which is connected to the first cartridge part (38), for supporting the bearing (42) in a second axial direction which is opposed to the first axial direction, the first cartridge part (38) having a seal, in particular a radial shaft sealing ring (44), a gap seal and/or a labyrinth seal, and the insulation element (34) bearing flatly at least against the second cartridge part (40).

7. Bearing assembly (28) according to one of Claims 1 to 6, the insulation element (34) configuring a contactless seal, in particular a gap seal or a labyrinth seal, with respect to a shell surface which can be rotated relative to the bearing cartridge (36).

8. Bearing assembly (28) according to Claim 7, the insulation element (34) sealing an axial side of a/the bearing (42) of the bearing cartridge (36).

9. Bearing assembly (28) according to one of Claims 1 to 8, the bearing cartridge (36) being configured to support radial forces between the pitch tube (26) and the transmission shaft (30).

10. Bearing assembly (28) according to one of Claims 1 to 9, the first fastening element (46) and the second fastening element (48) being oriented in the axial direction, the first fastening element (46) and the second fastening element (48) being covered completely, as viewed in the radial direction, by the pitch tube (26) and/or by the transmission shaft (30).

11. Bearing assembly (28) according to one of Claims 1 to 10, a/the bearing (42) of the bearing cartridge (36) being lubricated with lubricating grease and/or lubricating oil.

12. Bearing assembly (28) according to one of Claims 1 to 11, the pitch tube (26), the bearing cartridge (36), the fastening flange (32) and the transmission shaft (30) being produced from an electrically conductive material, in particular steel.

13. Drive train (14) for a wind power plant (10) with a rotor shaft (16) which can be connected to a wind power-driven rotor (12), a motor shaft (19) of an electric machine (20) which can be operated in generator mode, a transmission (18) which connects the rotor shaft (16) to the motor shaft (19) in a torque-transmitting manner for the conversion of a torque and a rotational speed, and a pitch tube (26) which penetrates the transmission (18) in the axial direction, the pitch tube (26) being mounted in the transmission (18) in an electrically insulated manner by at least one bearing assembly (28) according to one of Claims 1 to 12.

14. Wind power plant (10) for generating electrical power from wind energy, with a rotor (12) for providing a torque from wind energy, a transmission (18) which is coupled to the rotor (12) for the conversion of the torque, and a generator (20) for generating electrical power from the torque which is introduced by the transmission (18), the rotor (12), the transmission (18) and the generator (20) being arranged coaxially with respect to one another, and a pitch tube (26) leading from the generator (20) through the transmission (18) as far as the rotor (12), the pitch tube (26) being mounted in the transmission (18) in an electrically insulated manner by at least one bearing assembly (28) according to one of Claims 1 to 12.

15. Data agglomerate with data packets combined in a common file or distributed over different files for modelling the three-dimensional design and/or the interactions of all the constituent parts which are provided in the bearing assembly (28) according to one of Claims 1 to 12, the data packets being prepared during processing by way of a data processing device to carry out additive production of the constituent parts of the bearing assembly (28) by way of 3D printing, and/or to carry out a simulation of the method of operation of the bearing assembly (28) based on the data stored in the data packets with regard to design, material properties and physical interactions.

## Revendications

1. Ensemble palier (28) pour un tube de pas d'une éolienne (10), comprenant
un arbre de transmission (30),
une cassette de palier (36), pour le montage et l'étanchéification du tube de pas (26) par rapport à l'arbre de transmission (30),
une bride de fixation (32), formée par l'arbre de transmission (30) ou par le tube de pas (26) pour la fixation en rotation de la cassette de palier (36) et
un élément d'isolation (34), fixé à la bride de fixation (32) par un premier élément de fixation (46) et à la cassette de palier (36) par un deuxième élément de fixation (48) pour isoler électriquement le tube de pas (26) par rapport à l'arbre de transmission (30).

2. Ensemble palier (28) selon la revendication 1, dans lequel le premier élément de fixation (46) est espacé du deuxième élément de fixation (48) et de la cassette de palier (36) de telle sorte que le premier élément de fixation (46) est isolé électriquement de l'élément d'isolation (34) par rapport au tube de pas (26), et le deuxième élément de fixation (48) est espacé de la bride de fixation (32) de telle sorte que le deuxième élément de fixation (48) est isolé électriquement de l'élément d'isolation (34) par rapport à l'arbre de transmission (30).

3. Ensemble palier (28) selon la revendication 1 ou 2, dans lequel le premier élément de fixation (46) et le deuxième élément de fixation (48) sont espacés l'un de l'autre dans la direction axiale de telle sorte que, vu dans la direction tangentielle, il existe un décalage sans chevauchement entre le premier élément de fixation (46) et le deuxième élément de fixation (48).

4. Ensemble palier (28) selon l'une des revendications 1 à 3, dans lequel le premier élément de fixation (46) et le deuxième élément de fixation (48) sont espacés l'un de l'autre dans la direction radiale de telle sorte que, vu dans la direction axiale, il existe un décalage sans chevauchement entre le premier élément de fixation (46) et le deuxième élément de fixation (48).

5. Ensemble palier (28) selon l'une des revendications 1 à 4, dans lequel le premier élément de fixation (46) et le deuxième élément de fixation (48) sont espacés l'un de l'autre dans la direction circonférentielle de telle sorte que, vu dans la direction radiale, il existe un décalage sans chevauchement entre le premier élément de fixation (46) et le deuxième élément de fixation (48).

6. Ensemble palier (28) selon l'une des revendications 1 à 5, dans lequel la cassette de palier (36) comprend une première partie de cassette (38) pour supporter un palier (42), en particulier un roulement, dans une première direction axiale, et une deuxième partie de cassette (40) reliée à la première partie de cassette (38) pour supporter le palier (42) dans une deuxième direction axiale opposée à la première direction axiale, la première partie de cassette (38) présentant un joint d'étanchéité, en particulier une bague d'étanchéité radiale (44), un joint à fente et/ou un joint à labyrinthe, et l'élément d'isolation (34) s'appuyant à plat au moins contre la deuxième partie de cassette (40).

7. Ensemble palier (28) selon l'une des revendications 1 à 6, dans lequel l'élément d'isolation (34) forme un joint d'étanchéité sans contact, en particulier un joint à fente ou un joint à labyrinthe, avec une surface d'enveloppe rotative par rapport à la cassette de palier (36).

8. Ensemble palier (28) selon la revendication 7, dans lequel l'élément d'isolation (34) assure l'étanchéité d'un côté axial d'un palier/du palier (42) de la cassette de palier (36).

9. Ensemble palier (28) selon l'une des revendications 1 à 8, dans lequel la cassette de palier (36) est conçue pour supporter des forces radiales entre le tube de pas (26) et l'arbre de transmission (30).

10. Ensemble palier (28) selon l'une des revendications 1 à 9, dans lequel le premier élément de fixation (46) et le deuxième élément de fixation (48) sont alignés dans la direction axiale, le premier élément de fixation (46) et le deuxième élément de fixation (48) étant entièrement recouverts, dans la direction radiale, par le tube de pas (26) et/ou par l'arbre de transmission (30).

11. Ensemble palier (28) selon l'une des revendications 1 à 10, dans lequel un palier/le palier (42) de la cassette de palier (36) est lubrifié avec de la graisse et/ou de l'huile lubrifiante.

12. Ensemble palier (28) selon l'une des revendications 1 à 11, dans lequel le tube de pas (26), la cassette de palier (36), la bride de fixation (32) et l'arbre de transmission (30) sont fabriqués dans un matériau électriquement conducteur, en particulier de l'acier.

13. Chaîne cinématique (14) pour une éolienne (10) comprenant un arbre de rotor (16) apte à être relié à un rotor (12) entraîné par la force du vent, un arbre de moteur (19) d'une machine électrique (20) apte à fonctionner en mode générateur, une transmission (18) reliant l'arbre de rotor (16) à l'arbre de moteur (19) de manière à transmettre le couple, afin de convertir un couple et une vitesse de rotation, et un tube de pas (26) traversant la transmission (18) dans la direction axiale, le tube de pas (26) étant monté dans la transmission (18), de manière isolée électriquement, par au moins un ensemble palier (28) selon l'une des revendications 1 à 12.

14. Éolienne (10) pour produire de l'énergie électrique à partir de l'énergie éolienne, comprenant un rotor (12) pour fournir un couple à partir de l'énergie éolienne, une transmission (18) reliée au rotor (12) pour convertir le couple et un générateur (20) pour produire de l'énergie électrique à partir du couple introduit par la transmission (18), le rotor (12), la transmission (18) et le générateur (20) étant agencés coaxialement les uns par rapport aux autres, et un tube de pas (26) partant du générateur (20) et traversant la transmission (18) jusqu'au rotor (12), le tube de pas (26) étant monté dans la transmission (18) de manière isolée électriquement par au moins un ensemble palier (28) selon l'une des revendications 1 à 12.

15. Agrégat de données comprenant des paquets de données regroupés dans un fichier commun ou répartis dans différents fichiers pour représenter la conception tridimensionnelle et/ou les interactions de tous les composants prévus dans l'ensemble palier (28) selon l'une des revendications 1 à 12, les paquets de données étant conçus pour permettre, lors d'un traitement par un dispositif de traitement de données, une fabrication additive des composants de l'ensemble palier (28) par impression 3D et/ou une simulation du fonctionnement de l'ensemble palier (28) sur la base des données enregistrées dans les paquets de données concernant la conception, les propriétés des matériaux et les interactions physiques.
